# FASCICULE DE BREVET EUROPEEN

(11) **EP 3 774 694 B1**
(45) Date de publication et mention de la délivrance du brevet: **09.02.2022**
(21) Numéro de dépôt: 19718427.8
(22) Date de dépôt: 19.03.2019
(51) Int. Cl.: C05F 17/907, C05F 17/964

(54) **DISPOSITIF DE COMPOSTAGE**
KOMPOSTIERVORRICTHUNG
COMPOSTING DEVICE

(30) Priorité: 28.03.2018 FR 1852682
(43) Date de publication de la demande: 17.02.2021
(73) Titulaire: Boudet, Christophe, 58130 Ourouër (FR); Ramond, Louis, 58270 Beaumont-Sardolles (FR)
(72) Inventeur: Boudet, Christophe, 58130 Ourouër (FR); Ramond, Louis, 58270 Beaumont-Sardolles (FR)
(74) Mandataire: Cabinet Laurent & Charras
(86) Numéro de dépôt international: PCT/FR2019/050609
(87) Numéro de publication internationale: WO 2019/186026

(56) Documents cités:
- EP-A2- 1 247 563
- WO-A1-2009/158692
- US-A1- 2013 052 726

## Description

### DOMAINE DE L'INVENTION

L'invention concerne un dispositif de compostage, plus particulièrement destiné à un usage domestique. Ce dispositif de compostage est avantageusement mobile, de telle sorte à en faciliter l'utilisation.

### ETAT ANTERIEUR DE LA TECHNIQUE

Le compostage est un processus biologique aérobie, donc en présence d'oxygène notamment contenu dans l'air ambiant, destiné de manière connue à assurer la conversion et la valorisation des matières organiques contenues dans les déchets, notamment d'origine ménagère, mais également susceptibles d'être contenus dans les sous-produits de l'élevage (la biomasse etc.) afin d'obtenir un produit stabilisé riche en composés humiques et minéraux, traditionnellement appelé le compost.

Dans le cadre de ce compostage, les déchets organiques sont dégradés en présence de l'oxygène de l'air et d'humidité, par l'action conjuguée notamment de bactéries, champignons, micro-organismes et macro-organismes. C'est une technique aujourd'hui largement usitée.

De nombreux bacs de compostage ou dispositifs équivalents existent à ce jour. Parmi ceux-ci, il n'est pas rare de trouver des bacs semblables à des poubelles classiques, mais dont l'expérience démontre que la dégradation aérobie des déchets organiques n'intervient pas correctement, de sorte qu'en lieu et place du compostage, on aboutit à des poches de méthanisation, c'est-à-dire à la genèse de gaz, typiquement du méthane, qui ne correspond pas au but recherché.

On connaît également le principe de bacs de compostage, non pas statiques, mais rotatifs, tel que par exemple décrit dans de document US 2007/327432, dont la vocation est de permettre un brassage, à périodicité plus ou moins régulière, du contenu du bac afin de favoriser l'opération proprement dite de compostage. D'autres appareils de compostage sont connus, par exemple EP 1 247 563 ou US 2013/052726.

Ces bacs rotatifs sont soit réalisés en tôle, soit en matière plastique. L'expérience démontre que, soit ces bacs sont de volume insuffisant de sorte que la montée en température inhérente à la dégradation des déchets organiques est insuffisante, soit en raison du caractère isolant du matériau qui les constitue, l'opération de compostage n'intervient pas pendant les périodes froides ou trop chaudes (hiver et été), affectant en conséquence l'opération de compostage proprement dite.

En outre, lors de l'opération de compostage, il se forme des jus qu'il convient d'évacuer de manière périodique. Les bacs de compostage de l'art antérieur ne présentent pas en général du système de vidange de ces jus, affectant dès lors l'optimisation de l'opération de compostage.

L'objet de la présente invention vise un dispositif de compostage, surmontant ces différents inconvénients, dont la structure optimise, d'une part, les opérations de compostage proprement dites et, d'autre part, facilite son utilisation par l'opérateur, tant dans le cadre du remplissage que de la vidange du bac de compostage.

### EXPOSE DE L'INVENTION

Le dispositif de compostage de l'invention comprend au moins un bac de compostage destiné à recevoir les déchets à composter, ledit bac étant monté rotatif sur un axe horizontal solidaire d'un châssis, ledit bac étant pourvu d'une ouverture, obturable, apte à permettre d'une part le remplissage du bac en déchets organiques, et la vidange dudit bac après compostage.

Selon l'invention, l'axe de rotation du bac de compostage est décentré par rapport au centre de gravité rotationnel dudit bac, de telle sorte que par défaut, c'est-à-dire en l'absence de toute contrainte ou action extérieure, l'ouverture du bac est positionnée en zone supérieure du dispositif, typiquement en haut de celui-ci.

En d'autres termes, l'invention consiste, d'une part, à conférer au bac une forme particulière, typiquement non pas en symétrie de révolution, mais dont le plan sagittal vertical est en forme de poire, de telle sorte à déplacer son centre de gravité vers le bas, et, d'autre part, à décentrer l'axe de rotation du bac ainsi constitué, favorisant l'accessibilité du bac par l'opérateur en raison de la position haute de l'ouverture donnant accès à l'intérieur dudit bac.

Selon une caractéristique avantageuse de l'invention, l'ouverture du bac est obturée par un couvercle articulé sur l'un des bords de ladite ouverture, ledit couvercle étant clipsable réversiblement sur le bord opposé de l'ouverture, fermant ainsi de manière étanche le bac.

Afin de favoriser cette étanchéité, un joint caoutchouc, par exemple thermocollé sur le bord du couvercle, est mis en œuvre.

Avantageusement, ce couvercle est muni d'une poignée, dont la forme arquée est susceptible de coopérer avec le châssis sur lequel est monté le bac, pour maintenir le bac en position de vidange, c'est-à-dire avec l'ouverture dirigée vers le bas.

Selon une autre caractéristique de l'invention, le bac est réalisé en matière plastique, typiquement en polypropylène ou en PEHD (polyéthylène haute densité) par rotomoulage. Alternativement, le bac est réalisé par injection, notamment en polypropylène, voire même en polypropylène recyclé.

Il présente un certain nombre de saillies radiales dirigées en direction de l'intérieur du bac, et définissant au niveau de sa périphérie des zones de positionnement des mains de l'opérateur afin de favoriser sa rotation. Ces saillies radiales ont pour objectif d'optimiser la désagglomération des déchets contenus dans le bac ou en cours de transformation, résultant du compostage.

Selon une autre caractéristique avantageuse, le dispositif comprend également un seau, muni d'un couvercle articulé, l'axe d'articulation du couvercle sur le seau étant susceptible d'être réceptionné dans des logements prévus à cet effet au niveau de la zone d'ouverture du bac, les dimensions de l'ouverture supérieure du seau correspondant à celles de l'ouverture dont est muni le bac. Ce seau à vocation à être rempli des bio-déchets, par exemple d'origine ménagère, afin de remplir le bac de compostage.

Selon une autre caractéristique de l'invention, le châssis comportant l'axe horizontal de rotation du bac, est muni d'au moins deux roues montées libres en rotation, aptes à favoriser le déplacement du dispositif, l'axe reliant les deux roues permettant la fixation réversible de la poignée émanant du couvercle dont est munie l'ouverture du bac. Selon une autre caractéristique de l'invention, le dispositif de compostage ne comporte pas un mais deux bacs, sensiblement identiques l'un à l'autre, montés parallèlement et indépendamment l'un de l'autre sur l'axe de rotation du châssis.

Ce faisant, il est possible à l'opérateur de remplir un premier bac et permettre ainsi le démarrage d'un premier compostage et, concomitamment, de remplir au fur et à mesure l'autre bac, au gré de la disposition des déchets organiques, optimisant l'efficacité du dispositif de l'invention et surtout son utilisation.

### BREVE DESCRIPTION DES FIGURES

La manière dont l'invention peut être réalisée, et les avantages qui en découlent, ressortiront mieux de l'exemple de réalisation qui suit, donné à titre indicatif et non limitatif à l'appui des figures annexées.
Les figures 1 et 2 sont des représentations schématiques en perspective du dispositif de compostage conforme à l'invention, vues selon deux angles différents.
Les figures 3 et 4 sont des vues analogues aux figures 1 et 2, dans lesquelles l'un des bacs subit une rotation.
Les figures 5 à 7 sont des vues en section sagittale du dispositif de l'invention, selon différents positionnement, soit du couvercle, soit de l'un des bacs proprement dit.
La figure 8 est une représentation en détail du bac de l'invention, mettant en évidence l'organe de purge du jus résultant du compostage.
La figure 9 est une représentation en détail de la zone d'ouverture de l'un des bacs du dispositif de compostage de l'invention.

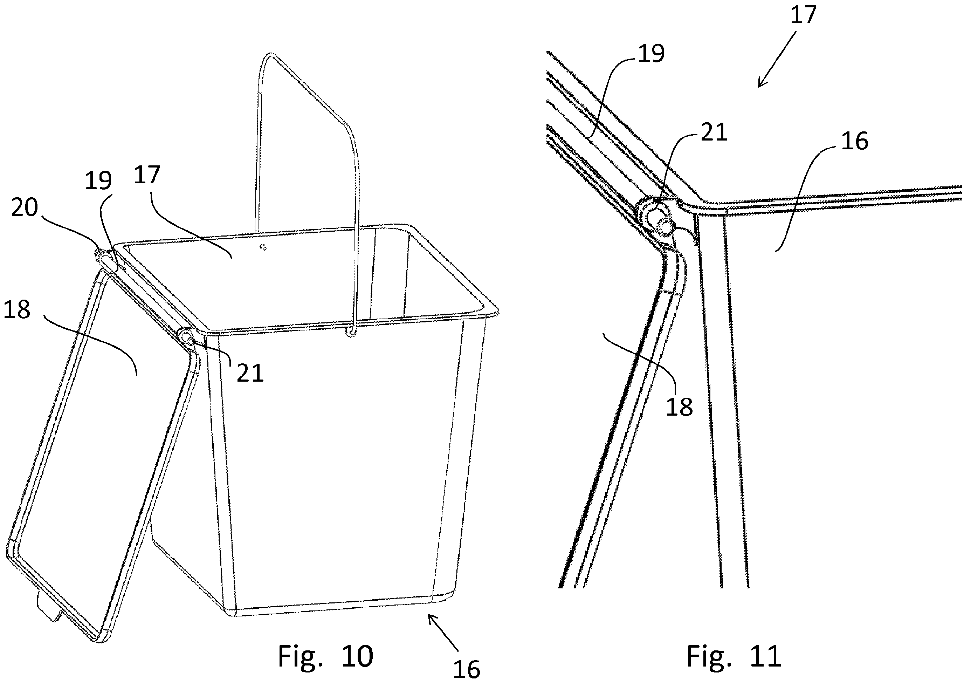

Les figures 10 et 11 sont des représentations schématiques d'un seau susceptible de venir se positionner au niveau de l'ouverture du bac de compostage.
Les figures 12 à 15 illustrent schématiquement la coopération du seau des figures 10 et 11 avec l'ouverture du bac.

### DESCRIPTION DETAILLEE DE L'INVENTION

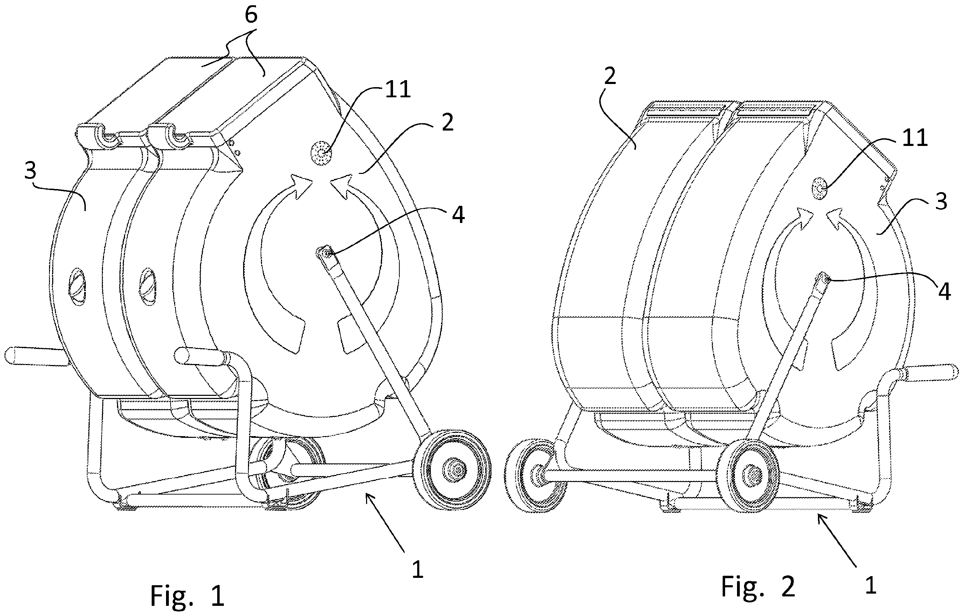

Les figures 1 et 2 illustrent donc schématiquement le dispositif de compostage conforme à un mode particulier de réalisation de l'invention. Ce dispositif de compostage comporte fondamentalement un châssis (1), muni d'un axe d'articulation horizontal (4), sur lequel sont articulés deux bacs de compostage (2) et (3).

Plus spécifiquement, ces bacs de compostage (2) et (3) sont sensiblement identiques l'un à l'autre, et sont typiquement réalisés par injection de polypropylène recyclé. Ils sont étanches.

Dans l'exemple décrit, le volume de chacun de ces bacs de compostage est typiquement compris entre 140 et 170 litres. L'épaisseur des parois des bacs, par exemple 5 millimètres, est bien évidemment choisie en fonction de la résistance mécanique nécessaire, d'une part, et donc de la charge que sont susceptibles de recevoir chacun des deux bacs, et d'autre part, en fonction des impératifs thermiques : ainsi, une bonne isolation permet une montée en température supérieure à 55 °C, favorisant l'hygénisiation du compost.

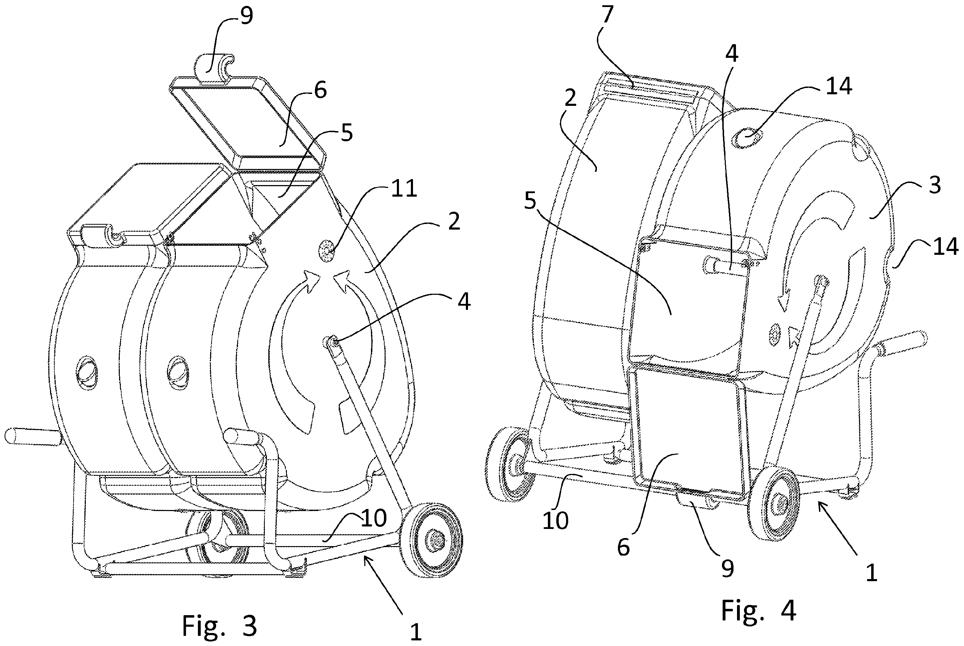

Ainsi qu'on peut l'observer, notamment sur les figures 1 et 2, voire encore sur les figures 3 et 4, ces bacs présentent une forme asymétrique, typiquement en forme de poire, la zone d'asymétrie définissant une ouverture (5), en l'espèce de forme carrée ou rectangulaire. Cette ouverture (5) est destinée à permettre à l'opérateur d'introduire les déchets organiques dans les bacs (2) et (3) en vue de leur futur compostage. De plus, cette asymétrie contribue à rompre le phénomène de colmatage et facilite l'aération du compost en cours de constitution.

Par ailleurs et selon une caractéristique fondamentale de la présente invention, l'axe d'articulation (4), horizontal, et intégré dans le châssis (1), est décentré par rapport au centre gravitationnel des bacs (2) et (3). En raison de ce décentrage, par défaut, c'est-à-dire en l'absence de toute contrainte extérieure, les bacs (2) et (3) sont, par simple effet de la gravité, positionnés tel que représenté sur les figures 1 et 2, c'est-à-dire avec l'ouverture (5) en zone supérieure du dispositif, c'est-à-dire en haut sur lesdites figures. On favorise ce faisant le chargement des bacs (2) et (3) en déchets organiques à composter.

Selon l'invention, l'ouverture (5) de chacun des bacs (2, 3) est de forme rectangulaire ou carrée. Elle est obturée au moyen d'un couvercle (6), de forme correspondant à celle de l'ouverture (5), ce couvercle (6) étant articulé au moyen d'une charnière (7) sur l'un des bords de l'ouverture (5).

Le couvercle (6) est avantageusement muni d'un joint caoutchouc thermocollé, de telle sorte à optimiser l'étanchéité du bac, notamment lors des opérations de rotation dudit bac. En position de fermeture, le couvercle (6) vient se clipser au voisinage du bord de l'ouverture (5), opposé à celui recevant la charnière (7).

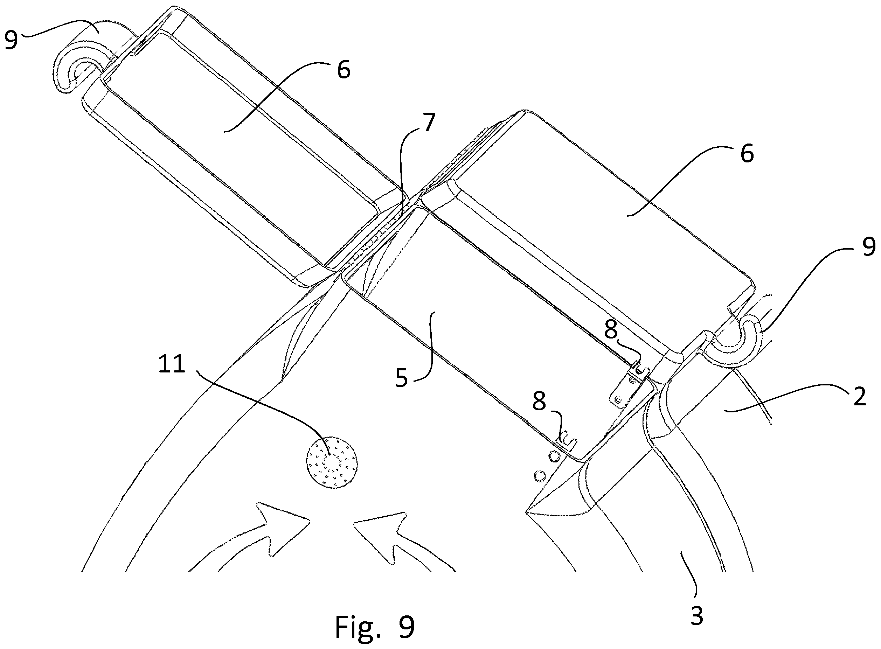

A cet effet, l'ouverture (5) présente au voisinage dudit bord, des organes (8) (voir figure 9) aptes à coopérer avec des axes (non représentés) émanant du bord interne du couvercle pour assurer ce clipsage. On favorise ainsi l'étanchéité de chacun des deux bacs (2) et (3).

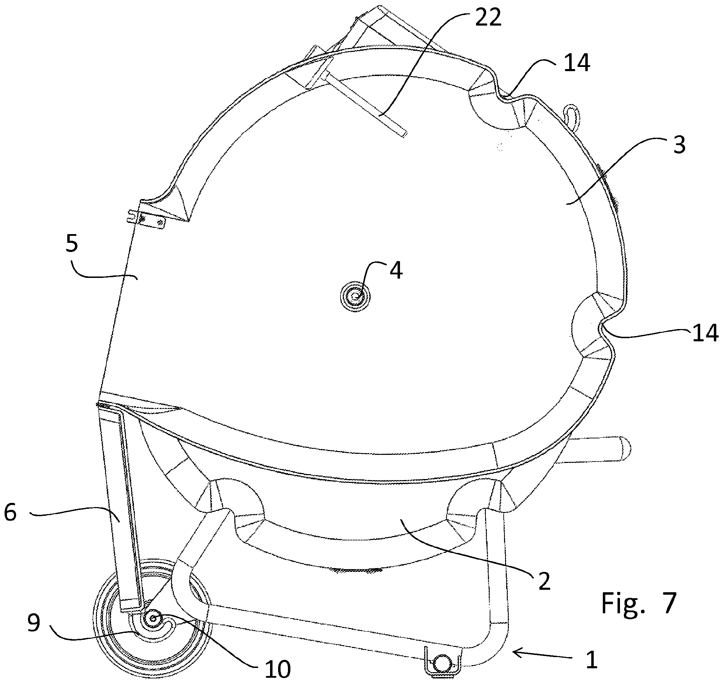

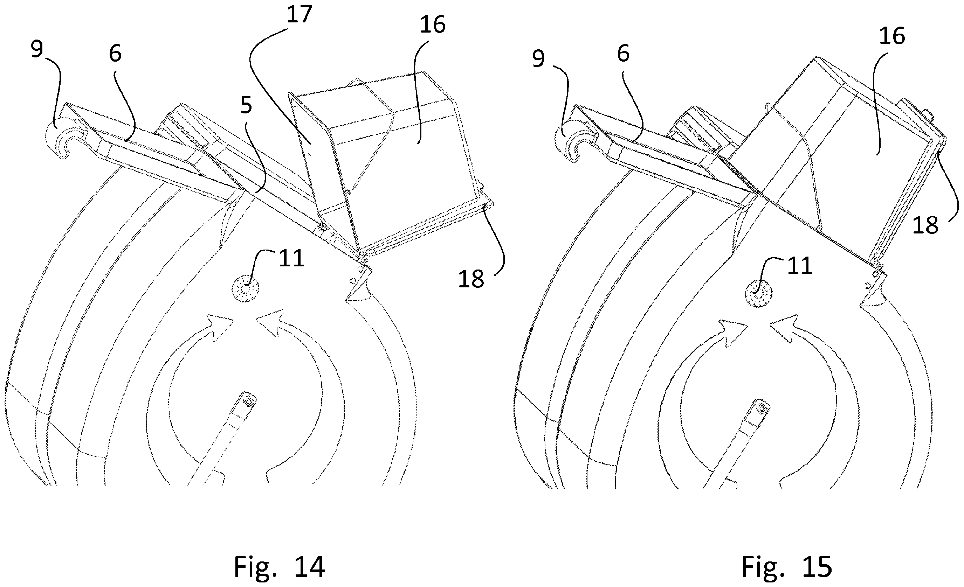

Par ailleurs, le couvercle (6) présente, au niveau de son bord opposé à celui recevant la charnière (7), une poignée (9) de forme courbe, tel qu'on peut bien l'observer par exemple sur les figures 15 et 16. Cette poignée, outre qu'elle favorise la manipulation et notamment la rotation des bacs en cours d'opération de compostage, a également pour vocation de venir coopérer avec l'un des tubes (10) constitutifs du châssis (1), comme illustré sur la figure 7. Ce faisant, on facilite l'opération de vidange du bac considéré, en maintenant ledit bac en position de vidange (figure 7), nonobstant la gravité s'exerçant sur ledit bac et s'opposant donc à son positionnement naturel tel que représenté dans les figures 1 et 2.

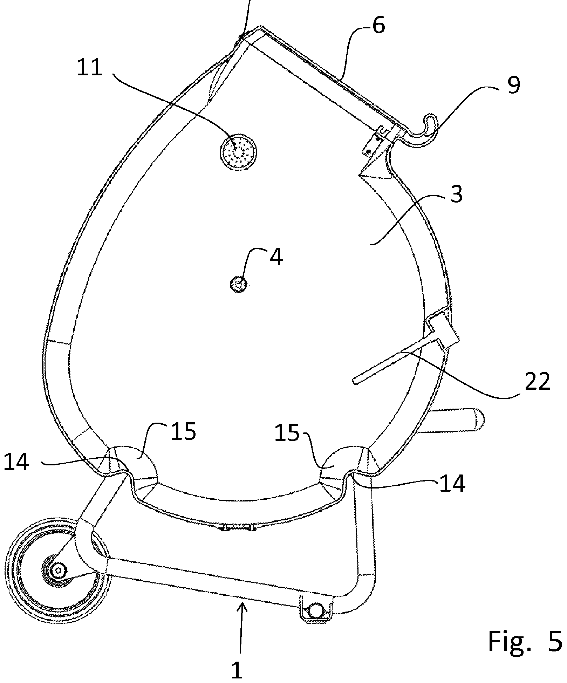

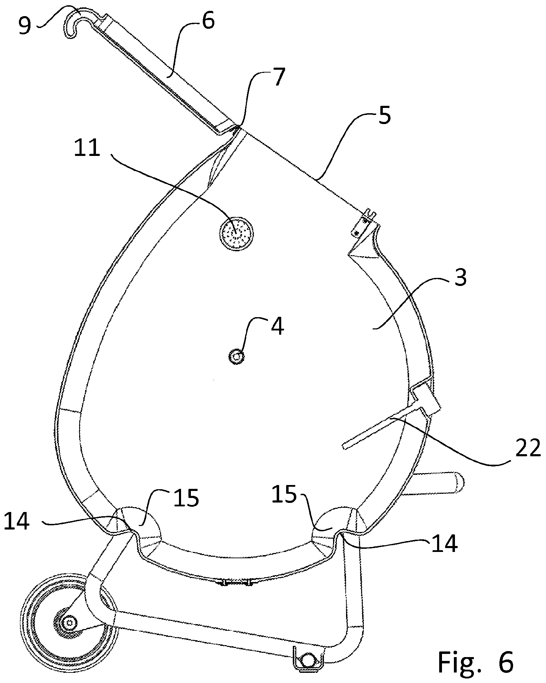

Les figures 5, 6 et 7 illustrent ainsi l'un des deux bacs (3) respectivement en position obturée, en position de remplissage (figure 6) et en pension de vidange (figure 7).

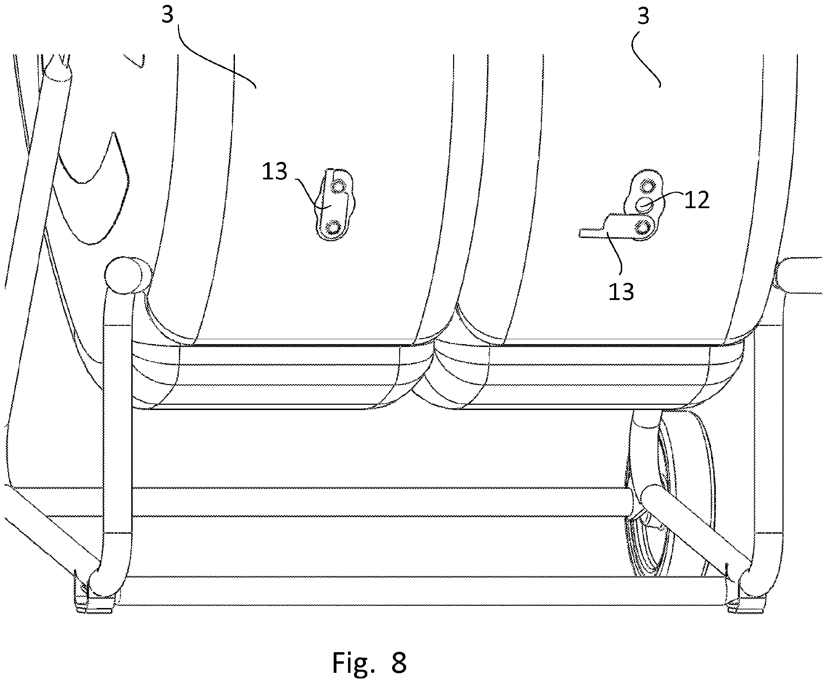

Chacun des deux bacs (2, 3) est en outre muni :
- d'au moins un évent supérieur (11), ménagé dans l'une et avantageusement les deux cloisons latérales planes définissant lesdits bacs. Ces évents ont vocation à permettre l'entrée permanente d'air et donc d'oxygène à l'intérieur du volume défini par chacun de ces bacs, afin de permettre la réalisation effective de l'opération de compostage.
- au voisinage de sa zone inférieure, d'un orifice de vidange (12) des jus résultant de l'opération de compostage, ces orifices étant obturés au moyen d'un organe d'obturation (13) tel qu'illustré sur les figures 8 et 9.
- d'un thermomètre (22), plongeant à l'intérieur desdits bacs, et permettant de surveiller et de contrôler la température. En effet, si cette dernière ne s'élève pas, typiquement vers 50 - 55 °C, le compostage ne s'effectue pas et il convient alors de brasser le contenu du ou des bacs par rotation desdits bacs.

Avantageusement, la paroi périphérique liant entre elles les deux parois latérales planes de chacun des deux bacs, est munie de saignées (14), typiquement deux, résultant de l'injection, favorisant la préhension par l'opérateur des bacs en vue d'assurer leur rotation périodique en vue de brassage ou l'opération de vidange. Ces saignées (14) définissent des saillies radiales (15), dirigées en direction de l'intérieur des bacs, destinées lors des opérations de rotation desdits bacs à assurer une désagglomération des déchets contenus dans celui-ci lors des opérations de compostage, ce dans le but d'optimiser l'opération de compostage proprement dite.

Avantageusement, le dispositif de compostage de l'invention comporte également un seau indépendant (16), destiné à recueillir les bio-déchets, typiquement résultant des opérations ménagères, épluchures, etc.., puis à verser ces bio-déchets ainsi collectés dans l'un des deux bacs de compostage.

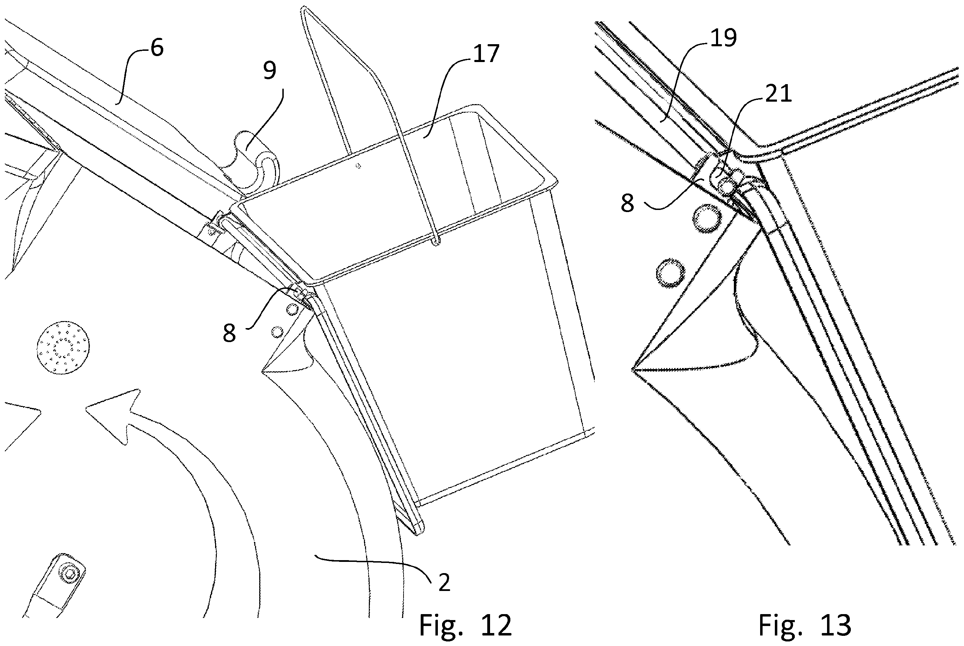

A cet effet, ce seau présente une ouverture supérieure (17), dont la forme également carrée ou rectangulaire correspond à celle des ouvertures (5). Ce seau peut être obturable par un couvercle (18), de forme complémentaire à l'ouverture (17), articulé sur l'un des bords de l'ouverture (17) au moyen d'un axe d'articulation (19). Cet axe d'articulation présente deux saillies extrêmes (20) et (21), destinées à être reçues dans les organes (8) ménagés au niveau de l'ouverture (5) des bacs, permettant le clipsage du couvercle (6) sur l'ouverture (5). Ce faisant et ainsi qu'illustré sur les figures 13 et 14, lorsque l'opérateur, après avoir collecté des bio-déchets, souhaite les vider dans l'un des deux bacs (2, 3), il positionne le seau par le biais des saillies (20) et (21) dans les organes (8) alors même que le bac considéré est en position haute, c'est-à-dire naturellement en l'absence de toute contrainte (figure 14), rabat le seau sur l'ouverture (5) (figure 15), engendrant la chute des bio-déchets contenus dans le seau dans le bac considéré par simple gravité et de manière propre, c'est-à-dire sans risque d'étaler des bio-déchets à l'extérieur du bac considéré.

Le châssis (1), typiquement réalisé à l'aide de tubes tubulaires, est avantageusement muni de deux roues (figures 1 à 4), outre de deux poignées, favorisant le transport du dispositif de compostage au lieu souhaité par l'opérateur.

On conçoit tout l'intérêt du dispositif de l'invention en raison, d'une part, de l'optimisation de l'opération de compostage résultant de sa structure, mais également, de son utilisation par l'opérateur, plus particulièrement lorsque le dispositif comporte deux bacs (2) et (3), indépendants de l'autre et, corollairement, pouvant être actionnés là encore indépendamment l'un de l'autre.

## Revendications

1. Dispositif de compostage comprenant au moins un bac de compostage (2, 3) destine à recevoir les déchets à composter, ledit bac étant monté rotatif sur un axe horizontal (4) solidaire d'un châssis (1), ledit au moins un bac étant pourvu d'une ouverture (5) obturable, apte à permettre d'une part le remplissage dudit au moins un bac en déchets organiques, et la vidange dudit bac après compostage, ***caractérisé* en ce que** l'axe de rotation (4) dudit au moins un bac de compostage (2, 3) est décentré par rapport au centre de gravité rotationnel dudit bac, de telle sorte que par défaut, c'est-à-dire en l'absence de toute contrainte ou action extérieure, l'ouverture (5) du bac est positionnée en zone supérieure du dispositif.

2. Dispositif de compostage selon la revendication 1, ***caractérisé* en ce que** ledit au moins un bac de compostage (2, 3) est réalisé en matière plastique, typiquement en polypropylène ou en PEHD (polyéthylène haute densité) par rotomoulage.

3. Dispositif de compostage selon la revendication 1, ***caractérisé* en ce que** ledit au moins un bac de compostage (2, 3) est réalisé en matière plastique, typiquement en polypropylène ou en polypropylène recyclé par injection.

4. Dispositif de compostage selon l'une des revendications 1 à 3, ***caractérisé* en ce que** ledit au moins un bac de compostage (2, 3) présente une section verticale sagittale asymétrique, apte à décaler son centre de gravité vers le bas du dispositif.

5. Dispositif de compostage selon l'une des revendications 1 à 4, ***caractérisé* en ce que** l'ouverture (5) dudit au moins un bac de compostage (2, 3) est obturée par un couvercle (6), articulé sur l'un des bords de ladite ouverture, ledit couvercle étant clipsable réversiblement sur le bord opposé de l'ouverture, fermant ainsi de manière étanche le bac.

6. Dispositif de compostage selon la revendication 5, ***caractérisé* en ce que** le couvercle (6) est muni d'une poignée (9), dont la forme arquée est susceptible de coopérer avec le châssis (1) sur lequel est monté le bac, pour maintenir ledit bac en position de vidange, c'est-à-dire avec l'ouverture (5) dirigée vers le bas.

7. Dispositif de compostage selon l'une des revendications 1 à 6, ***caractérisé* en ce que** ledit au moins un bac de compostage (2, 3) présente un certain nombre de saillies radiales (15) dirigées en direction de l'intérieur du bac, et définissant au niveau de sa périphérie des saignées ou zones (14) de positionnement des mains de l'opérateur afin de favoriser sa rotation.

8. Dispositif de compostage selon l'une des revendications 1 à 3, ***caractérisé* en ce qu'**il comprend un seau (16) de collecte des bio-déchets, muni d'un couvercle articulé (18) apte à obturer ledit seau, l'axe d'articulation (19) du couvercle (18) sur le seau (16) étant susceptible d'être réceptionné dans des logements (8) prévus à cet effet au niveau de la zone d'ouverture (5) dudit au moins un bac de compostage (2, 3), les dimensions de l'ouverture supérieure (17) du seau (16) correspondant à celles de l'ouverture (5) dont est muni le bac.

9. Dispositif de compostage selon l'une des revendications 1 à 8, ***caractérisé* en ce qu'**il comprend deux bacs de compostages (2, 3), sensiblement identiques l'un à l'autre, montés parallèlement et indépendamment l'un de l'autre sur l'axe de rotation (4) du châssis (1).

10. Dispositif de compostage selon l'une des revendications 6 à 9, ***caractérisé* en ce que** le châssis (1) comportant l'axe horizontal (4) de rotation du ou des bacs de compostage (2, 3), est muni d'au moins deux roues montées libres en rotation, aptes à favoriser le déplacement du dispositif, l'axe reliant les deux roues permettant la fixation réversible de la poignée (9) émanant du couvercle (6) dont est munie l'ouverture (5) des bacs.

## Patentansprüche

1. Kompostiervorrichtung mit mindestens einem Kompostierbehälter (2, 3) zur Aufnahme des zu kompostierenden Abfalls, wobei der Behälter drehbar auf einer horizontalen Welle (4) montiert ist, die an einem Rahmen (1) befestigt ist, wobei dieser mindestens eine Behälter mit einer verschließbaren Öffnung (5) versehen ist, die sowohl das Befüllen des mindestens einen Behälters mit organischem Abfall und das Entleeren des Behälters nach der Kompostierung ermöglicht, ***dadurch gekennzeichnet, dass*** die Rotationswelle (4) des mindestens einen Kompostierbehälters (2, 3) vom Rotationsschwerpunkt des Behälters aus außermittig angeordnet ist, so dass standardmäßig, d.h. ohne Zwang oder äußere Einwirkung, die Behälteröffnung (5) sich im oberen Bereich des Gerätes befindet.

2. Kompostiervorrichtung nach Anspruch 1, ***dadurch gekennzeichnet, dass*** dieser mindestens eine Kompostierbehälter (2, 3) aus Kunststoff hergestellt wird, typischerweise durch Rotationsformen aus Polypropylen oder PEHD (hochdichtes Polyethylen).

3. Kompostiervorrichtung nach Anspruch 1, ***dadurch gekennzeichnet, dass*** dieser mindestens eine Kompostierbehälter (2, 3) aus Kunststoff, typischerweise durch Spritzgießen, aus Polypropylen oder aus Recycling- Polypropylen hergestellt wird.

4. Kompostiervorrichtung nach einem der Ansprüche 1 bis 3, ***dadurch gekennzeichnet, dass*** dieser mindestens eine Kompostierbehälter (2, 3) einen asymmetrischen, vertikalen Bogenschnitt enthält, mit dem der Schwerpunkt in den unteren Bereich der Vorrichtung verschoben werden kann.

5. Kompostiervorrichtung nach einem der Ansprüche 1 bis 4, ***dadurch gekennzeichnet, dass*** die Öffnung (5) dieses mindestens einen Kompostierbehälters (2, 3) durch einen Deckel (6) verschlossen wird, der abgewinkelt an einem Rand dieser Öffnung angebracht ist, dieser Deckel kann reversibel am entgegengesetzten Rand der Öffnung eingerastet werden und so den Behälter dicht verschließen.

6. Kompostiervorrichtung nach Anspruch 5, ***dadurch gekennzeichnet, dass*** der Deckel (6) mit einem Handgriff (9) versehen ist, dessen gebogene Form ein Zusammenwirken mit dem Rahmen (1) erlaubt, auf dem der Behälter montiert ist, um diesen Behälter in der Entleerposition zu halten, also mit der Öffnung (5) nach unten gerichtet.

7. Kompostiervorrichtung nach einem der Ansprüche 1 bis 6, ***dadurch gekennzeichnet, dass*** dieser mindestens eine Kompostierbehälter (2, 3) eine gewisse Anzahl radialer Auskragungen (15) aufweist, die ins Innere des Behälters ragen, und in Höhe der Peripherie Einschnitte oder Zonen (14) zur Positionierung der Hände der Bedienperson aufweist, damit der Behälter leichter gedreht werden kann.

8. Kompostiervorrichtung nach einem der Ansprüche 1 bis 3, ***dadurch gekennzeichnet, dass*** sie einen Sammeleimer (16) für Bioabfälle enthält, versehen mit einem über Winkel befestigten Deckel (18), mit dem dieser Eimer verschlossen werden kann, die Gelenkachse (19) des Deckels (18) auf dem Eimer (16) kann in vorgesehenen Aussparungen (8) untergebracht werden, die zu diesem Zweck in Höhe der Öffnungszone (5) dieses mindestens einen Kompostierbehälters (2, 3), untergebracht sind, die Maße der oberen Öffnung (17) des Eimers (16) entsprechen dabei der Öffnung (5), mit der der Behälter versehen ist.

9. Kompostiervorrichtung nach einem der Ansprüche 1 bis 8, ***dadurch gekennzeichnet, dass*** sie zwei im Wesentlichen gleiche Kompostierbehälter (2, 3), enthält, die parallel und unabhängig voneinander an der Rotationswelle (4) des Rahmens (1) montiert sind.

10. Kompostiervorrichtung nach einem der Ansprüche 6 bis 9, ***dadurch gekennzeichnet, dass*** der Rahmen (1), der die horizontale Rotationswelle (4) des oder der Kompostierbehälter (2, 3) enthält, mit mindestens zwei Räder ausgerüstet ist, die frei drehbar montiert sind, so dass sie eine Verschiebung der Vorrichtung erleichtern, wobei die Achse, die die beiden Räder verbindet, eine reversible Befestigung des Griffs (9) erleichtert, der aus dem Deckel (6) herausragt, mit dem die Öffnung (5) der Behälter versehen ist.

## Claims

1. A composting device comprising at least one composting bin (2, 3) intended to contain the waste to be composted, the said bin being mounted so that it can rotate about a horizontal rotation shaft (4) made integral with a chassis (1), the said at least one bin being provided with a closable opening (5), designed to allow on the one hand, the filling of the said at least one bin with organic waste and, on the other hand, the emptying of the said bin after composting, **characterized in that** the rotation shaft (4) of the said at least one composting bin (2, 3) is off-centred with respect to the rotational centre of gravity of the said bin (2, 3), so that by default, i.e. in the absence of any external constraint or action, the opening (5) of the bin is placed in the upper zone of the device.

2. A composting device according to claim 1, **characterized in that** said at least one composting bin (2, 3) is made of plastic material, typically polypropylene or HDPE (high density polyethylene) by rotational moulding.

3. A composting device according to claim 1, **characterized in that** said at least one composting bin (2, 3) is made of plastic material, typically polypropylene or recycled polypropylene by injection moulding.

4. A composting device according to one of claims 1 to 3, **characterized in that** said at least one composting bin (2, 3) has an asymmetrical sagittal vertical section, capable of shifting its centre of gravity towards the bottom of the device.

5. A composting device according to one of claims 1 to 4, **characterized in that** the opening (5) of the said at least one composting bin (2, 3) is closed by a lid (6), hinged on one edge of the said opening, said lid having the property of being clipped on or undipped from the opposite edge of the opening, thus closing the bin tightly.

6. A composting device according to claim 5, **characterized in that** the lid (6) has a handle (9), the bow shape of which is designed to work together with the chassis (1) to which the bin is mounted, to keep the said bin in the emptying position, i.e. with the opening (5) facing downwards.

7. A composting device according to one of claims 1 to 6, **characterized in that** said at least one composting bin (2, 3) has a certain number of radial projections (15) directed towards the interior of the bin, and defining at its periphery grooves or zones (14) for positioning the operator's hands in order to promote its rotation.

8. A composting device according to one of claims 1 to 3, **characterized in that** it comprises a bucket (16) for collecting bio-waste, provided with a hinged lid (18) able to close the said bucket, the hinge pin (19) of the lid (18) on the bucket (16) being capable of being accommodated in recesses (8) provided for this purpose at the opening zone (5) of the said at least one composting bin (2, 3), while the dimensions of the upper opening (17) of the bucket (16) correspond to those of the opening (5) with which the bin is provided.

9. A composting device according to one of claims 1 to 8, **characterized in that** it comprises two composting bins (2, 3), substantially identical to each other, mounted parallel and independently of each other on the rotation shaft (4) of the chassis (1).

10. A composting device according to one of claims 6 to 9, **characterised in that** the chassis (1) comprising the horizontal rotation shaft (4) of the composting bin(s) (2, 3) has at least two freely rotatable wheels, suitable for facilitating the movement of the device, while the shaft connecting the two wheels allows the handle (9) leading out from the cover (6) with which the opening (5) of the bins is provided, to be reversibly secured.
